(19) **Europäisches Patentamt / European Patent Office / Office européen des brevets**

(11) **EP 0 965 053 B1**

(12) **EUROPEAN PATENT SPECIFICATION**

(45) Date of publication and mention
of the grant of the patent:
**24.01.2007 Bulletin 2007/04**

(21) Application number: **98908388.6**

(22) Date of filing: **27.02.1998**

(51) Int Cl.:
**G01S 13/34** *(2006.01)*  **F42C 13/04** *(2006.01)*

(86) International application number:
**PCT/SE1998/000362**

(87) International publication number:
**WO 1998/038526 (03.09.1998 Gazette 1998/35)**

(54) **METHOD AND DEVICE FOR DETERMINING DISTANCES**

VERFAHREN UND VORRICHTUNG ZUR ENTFERNUNGSBESTIMMUNG

PROCEDE ET DISPOSITIF D'EVALUATION DES DISTANCES

(84) Designated Contracting States:
**DE ES FR GB IT**

(30) Priority: **28.02.1997 SE 9700724**

(43) Date of publication of application:
**22.12.1999 Bulletin 1999/51**

(73) Proprietor: **SAAB AB**
**581 88 Linköping (SE)**

(72) Inventor: **AXELSSON, Sune**
**S-589 43 Linköping (SE)**

(74) Representative: **Holmberg, Magnus et al**
**Albihns Stockholm AB**
**P.O. Box 5581**
**114 85 Stockholm (SE)**

(56) References cited:
| | |
|---|---|
| FR-A- 2 581 765 | SE-B- 430 537 |
| SE-B- 435 874 | US-A- 2 907 023 |
| US-A- 3 913 103 | US-A- 4 232 314 |
| US-A- 4 389 649 | US-A- 4 660 040 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

TECHNICAL FIELD

The present invention relates to a device and a method for determining distances, such as in a radar installation, by means of issued and reflected electromagnetic waves, in particular in determining short distances s to a reflecting surface.

BACKGROUND

Radar is concerned with detecting and determining distances to objects and for this purpose microwaves within suitable frequency ranges are used, which are also called radar waves. For accurate determination of distances, for example determining short distances to an object, advantageously frequency modulated radar having a continuously issued wave, FMCW-radar is used, which is generally described in the book "Introduction to radar systems", M.I. Skolnik, 2nd ed., McGraw-Hill Book Company 1981, pp. 81 - 98.

Such a device, which can be both used for determining long or short distances, is disclosed in U.S. Patent US-A 2,907,023 for Skinner. A frequency modulated radar wave is issued having a triangular or sawtooth modulation. Suitable frequency components of the received signal is filtered out at frequencies equal to multiples of the modulation frequency and the amplitudes of these components are compared, which are obtained after removing a rapid sinusoidal dependency on the distance. For equality a control signal can be obtained. However, the comparison has to be made only for amplitude values about some threshold level, which can be difficult to determine. This prior design should be apt to erroneous indication owing to the fact that an issued signal can be reflected against for example a large surface located behind a target, so that a relatively strong received signal reflected from this surface will be detected. When filtering out suitable frequency components amplitudes having a complicated dependency on the distance are obtained, and thus the equality condition used provides little information on the distance. Furthermore, filters which are fixedly tuned to frequencies related to the modulation frequency must be used, what makes it difficult to modify or vary the modulation frequency.

In Swedish patent application published with No. 435874 for public inspection for Saab-Scama AB, furthermore a radar installation is described, which can be used for determining distances from a movable body. This radar installation employs a continuous transmitter signal, which is sinusoidally frequency modulated and which is mixed with the received echo signal, which has been reflected by a surface. The signal spectrum then obtained comprises among other things a plurality of tones related to the modulation frequency, i.e. signal components having frequencies equal to integer multiples of the modulation frequency. The amplitudes of the tones vary, when the rapid dependency on the distance has been removed, with the distance as Bessel functions $J_n$ of the first kind.

From this signal spectrum two bands are extracted, both around a predetermined Doppler frequency $f_d$ given by the relative velocity v of the radar installation in relation to the target and the wave length ($\lambda$) of the radar signal according to $f_d = 2v/\lambda$, and around the double modulation frequency. The signal strengths in these two frequency bands vary as the absolute value of the Bessel functions $J_0$ and $J_2$ respectively in addition to the rapid periodic dependency on distance as indicated above. Finally a difference signal is formed by taking the difference of these two signals, and this difference signal will then have a rather steeply increasing characteristic, i.e. the level of the output signal will be strongly changed, when the installation is closer to the reflecting target than a predetermined short distance. The difference signal can be further improved by amplifying the signals before forming the difference, so that a weighted difference is produced.

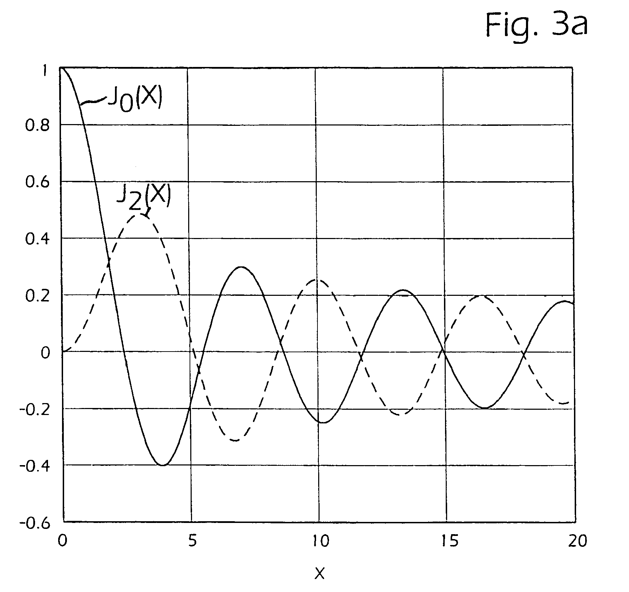

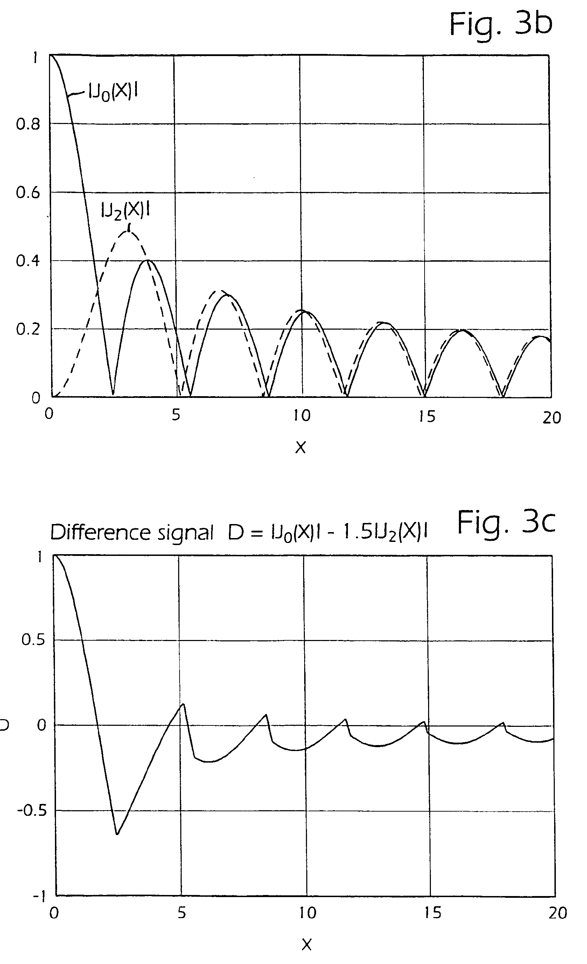

This prior method is illustrated by Figs. 3a - 3c, where in the diagram in Fig. 3a the Bessel functions $J_0(X)$ and $J_2(X)$ are shown as depending on a dimensionless quantity X, which is proportional to a distance R, according to

$$X = \frac{2\pi\Delta f}{c} \cdot R$$

where $\Delta f$ is the frequency swing in the modulation, for example 10 MHz, and c is the velocity of light. The absolute values of the functions appear from the diagram in Fig. 3b and a difference weighted in a suitable way is shown in the diagram in Fig. 3c, as above as functions of the quantity X. In Fig. 3c the weight factor d = 1.5 is used, and thus the shown function is:

$$|J_0(X)| \; - \; 1{,}5 \cdot |J_2(X)|$$

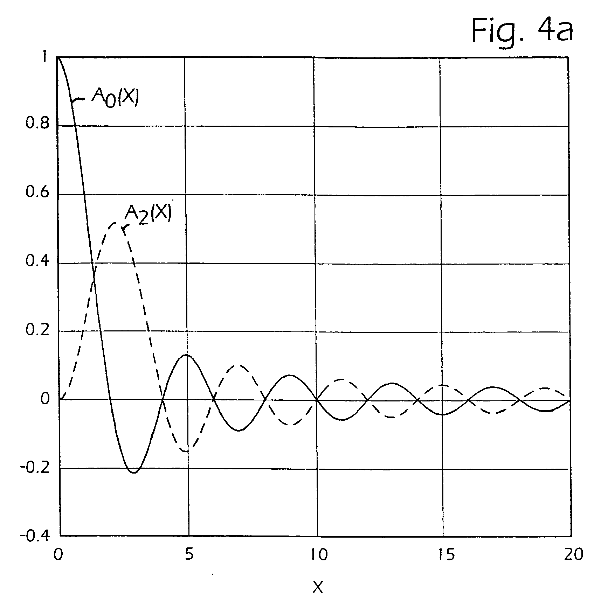

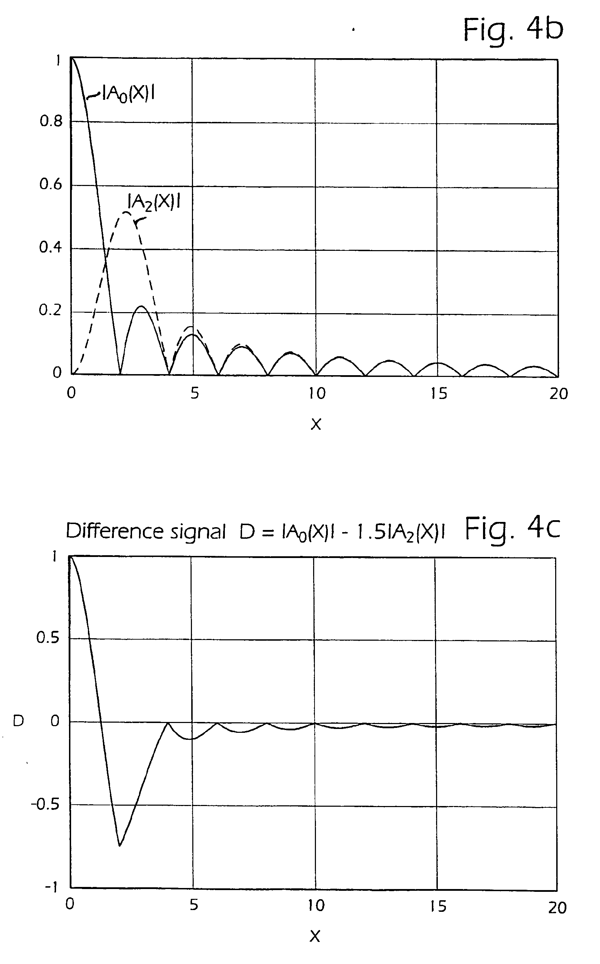

The figures do not show completely correct pictures since the amplitude of a reflected signal also has a dependency on the distance caused by the signal propagation and also depending on the antenna used and further on the magnitude of the reflecting area. The dependency of the distance can be of different kinds, so that the amplitude of the echo signal can for example be proportional to $R^{-1}$ or $R^{-2}$. This means that actually the absolute value of the difference signal decreases more rapidly for large values of X and thus large distances R than what is shown in Fig. 3c. Thus in Figs. 3 and 4 in the cited Swedish patent application curves are shown corresponding to Figs. 3e and 3c, in which the signals have been divided by R, but in the Fig. 3c appended hereto a pure difference is shown without considering any such dependency on the distance.

According to the above-cited U.S. patent for Skinner it is considered that a desired distance has been achieved, when two amplitudes filtered out agree with each other, i.e. that their difference is equal to zero. A dependent condition could however be that for equality the amplitudes should not be near zero, since else equality is obtained for all common zeroes. Furthermore, rather high multiples of the modulation frequencies are used - the multiples 7, 9 and 11, 12 are mentioned. Such a detection easily results in errors according to the discussion above. According to the cited Swedish patent application it is instead considered that a desired distance has been achieved, when a weighted difference of two signals for increasing values of the difference achieves a positive threshold value. These two signals are selected in a suitable way, so that at distances around and smaller than the desired one the difference signal has monotonously, rapidly increasing values, when the distance decreases. For distances larger than the desired one, the difference signal has only small regions having positive values and in these regions it has small maximum values. This gives a considerably more secure detection than in the method which is described in the U.S. patent.

In the Swedish patent application published with No. 430537 for public inspection for Svenska Philipsföretagen AB a proximity fuse is disclosed of a kind similar to that disclosed in the cited Swedish patent application for Saab-Scania AB. In the comparison of the results of two branches of a detector assembly a combination of "Doppler components" $D_{a1} - 1/2 \cdot D_{a2}$ can be used as one signal in the comparison whereas the other signal is $D_{a2} - 1/2 \cdot D_{a3}$. Here $D_{a1}$, $D_{a2}$, $D_{a3}$ are apparently the functions obtained for sawtooth modulation which correspond to $J_1$, $J_2$, $J_3$ respectively for sinusoidal modulation.

In U.S. patent 4,660,040 for Grandos target sensing apparatus is disclosed in which a carrier frequency is frequency modulated with a triangular wave and transmitted from a sensor to a target. The signal received from the target is mixed with a portion of the transmitted signal. At least two harmonics of the modulating frequency are filtered from the output of the mixer and they are synchronously detected with an harmonic of the same frequency to obtain a doppler signal that is detected and fed to a comparator.

As has been indicated above, when the intended target is located in front of a large, strongly reflecting area, from this area a reflected strong signal can be obtained, which is detected simultaneously being superposed on the desired signal. For this large reflecting area the regions in the difference signal derived from the reflected signal thereof, where positive values exist, can obtain so large maximum values that the threshold value is achieved. Then apparently erroneous detection is obtained. The derived amplitudes for a case comprising a plurality of reflected signals received at the same time is in a complicated way dependent on each of the signals.

An increased security against erroneous detection could be obtained by setting the threshold value at a higher value, such a setting however resulting in an insecure determination of the distance, since the reflected signal is strongly dependent of the target area, see Fig. 3 in the cited Swedish patent application for Svenska Philipsföretagen AB. Actually, one would like to detect on the zero at the lowest distance value, compare the accompanying Fig. 3c. Naturally this is not possible, since there is a plurality of zeroes. A compromise is to set the threshold value at a low value, so that the corresponding distance value always, for target areas or echo surfaces of different magnitudes, is near the intended zero. Then it must be arranged that the function used for a selected threshold value gives a sufficient security against erroneous detection. When selecting function and signal parameters one must consider allowed frequency values and possible signal powers. The function should be selected, so that the maximum values in the mentioned regions having positive values in turn are as small as possible, i.e. very near zero, and so that the regions furthermore are so short as possible, maintaining the general shape of the difference signal.

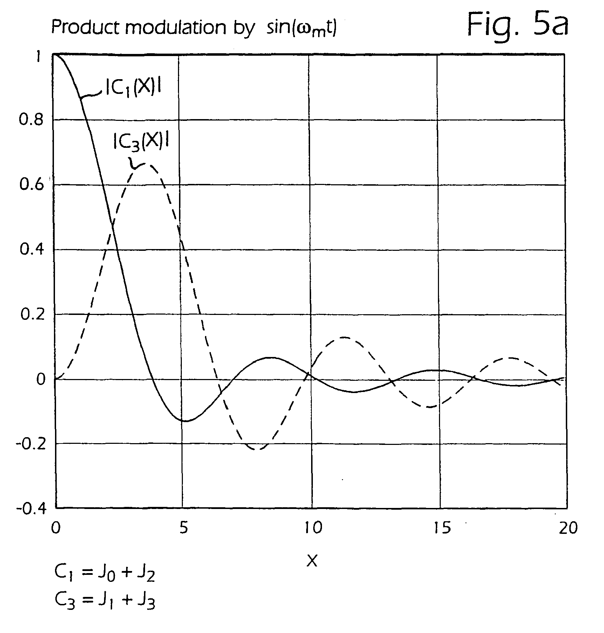

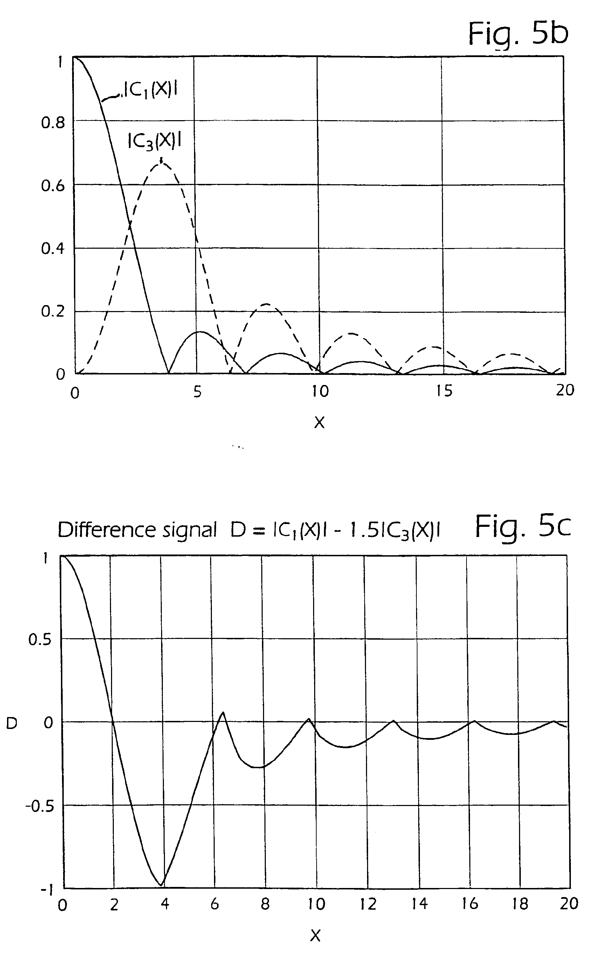

In order to obtain functions having the same general appearance as that of the function in Fig. 3c, in particular for small arguments, primarily Bessel functions of low orders and corresponding functions for triangular modulation are to be used, since functions having higher orders have regions comprising maximum absolute values for large arguments, generally in regions, where the argument X approximately is equal to the order of the function, compare Fig. 5 in the cited U.S. patent 2,907,023. This in turn means that the detection of signal components in the received echo signal is to be made at low multiples of the modulation frequency. This gives the additional advantage, that the dependency on $R^{-1}$ or $R^{-2}$ assists in reducing the values within the mentioned regions having positive values compared to the values within the region near the argument zero or zero distance, in which the detection is intended to be made. In order to maintain the appearance according to Fig. 3c also the difference signal or one of the signals, from which it is formed, must have a value different from zero at a zero distance, also in the case where the dependency of $R^{-1}$ and $R^{-2}$ is omitted.

In determining short distances proximity sensors are used, which can be designed to provide a signal when the sensors are closer to the target than some predetermined distance. In determining distances from a robot or a similar projectile usually a proximity sensor comprising a radar based distance sensing means of the type as described above and called a proximity fuse is used. The task of the proximity fuse is to ignite, at a predetermined suitable distance from the target, the charge which is carried by the robot or the projectile. It is obvious that the distance, at which the proximity fuse provides its ignition pulse, must be correctly set and also correctly measured which is most important, since an erroneous such setting or an erroneous such measurement completely or partly cancels the intended effect of the robot or the projectile to the target.

The prior methods as described above have thus significant apparent limitations for example for determination of the distance from a position located elevated in the air to a surface located at low height over the surface of the earth. When a proximity fuse is used at low heights, thus reflections from the underlying ground or an underlying water surface can strongly interfere with the desired signal, i.e. the signal which has been reflected by the intended target. In the worst case it can result in that the signal reflected by the target is completely suppressed or that the proximity fuse is made to trigger an ignition pulse at an erroneous distance.

When detecting around selected frequencies in principle according to the prior methods first a mixing of the received signal with a leak signal from the transmitter is used. Then band pass filters tuned to suitable frequencies are used, which are multiples of the modulated frequency, and thereupon an envelope detection. The bandpass filters have pass bands having a width corresponding to approximately the Doppler frequency. There a disadvantage exists, in that for a large change of the modulation frequency also the pass band of the tuned filters must be displaced, in particular in the case where higher multiples are to be detected. However, according to the cited Swedish patent application for Saab-Scania AB in one channel, a coherent detection can be made after the filtering around the desired multiple of the modulation frequency. Thereupon the signal is filtered in bandpass filters having pass bands around the Doppler frequency and having upper limit frequencies lower than half the modulation frequency. Then no tuned filters are required, since the corresponding effect is obtained by means of the control signal, which is used in the coherent detection.

SUMMARY

It is an object of the invention to provide radar installations and measuring methods carried out by means of such installations, by means of which determinations of distances can be executed with improved performance compared to what has been possible in the prior art. In particular the object is to prevent that a signal, which indicates that the installation is closer to a target than a predetermined distance, is triggered at an incorrect distance, or to prevent, that a large, non-desired signal from another reflector than the desired one or generally from a reflecting surface outside the target suppresses, dominates or hides the signal originating from the target, i.e. the object is generally to achieve that a small, desired signal, which indicates a distance to a considered target area, can be distinguished in a secure way.

Thus it is a further object of the present invention to provide radar installations and measuring methods carried out by such installations, by means of which a signal is generated indicating the distance of an intended target, wherein in the signal generation interfering contributions to the signal from sea or ground surfaces located in the vicinity of the target are reduced, such as surfaces located below or behind the target as seen from the radar installation.

A further object of the present invention is to provide radar installations and measuring methods carried out by means of such radar installations, by means of which a signal is generated indicating the distance to an intended target, in which the influence of interfering contributions to the signal from repeating interfering transmitters can be removed or in any case efficiently reduced.

A radar installation is thus provided in which reduced distance side lobes outside the detection area of a radar installation are obtained, in regard of the distances of different targets/surfaces.

The desired shape of the signal which is to be formed in a radar installation and which indicates the distance of an intended target, corresponds, according to the discussion of the prior art above, ideally to a function, which has values equal to zero for distances larger than some minimum distance and which has substantially infinite, positive values for distances smaller than the minimum distance, i.e. for distances decreasing below the minimum distance the values of the function increase very strongly. For such a function one can determine a suitable threshold value according to the discussion above, so that precisely when the function exceeds this value, one has with a large security come closer to a considered target than a minimum distance, so that the real distance then has not had time to decrease to a value too far below the minimum distance for commonly used approaching velocities. The value zero for larger distances, which in the known procedures corresponds to the repeated zeroes according to the discussion above, can furthermore be used for determining the zero level, from which the threshold value is to be counted or referred. The known functions of Bessel type or the corresponding type for triangular modulation are modified, so that the obtained signal still more resembles the ideal signal shape. The maximum values in said regions having positive values are made as small as possible and these regions are made as short as possible. The desired modification is achieved by using in principle the same procedure as in the above cited Swedish patent application for Saab-Scania AB and by forming in at least one of the channels a suitably chosen linear combination of Bessel functions or corresponding functions for other modulation cases. The linear combination is a combination of either only even or only odd Bessel functions or corresponding functions, most frequently of Bessel functions and corresponding functions of low order according to the discussion above.

Generally thus, for example signals having amplitudes corresponding to suitable chosen linear combinations of Bessel functions can be detected, which for distances larger than the minimum distance, i.e. for distances larger than the smaller zero, increases more rapidly with the distance then the combination of $J_0$ and $J_2$, which is described in the above cited patent application SE 6713687-9. This results in that the threshold value can be determined with larger security, so that it will be more difficult for interfering signals and noise to affect the signal and so that the detection that the sensing installation is closer to a target than the minimum distance becomes more secure.

Furthermore, in the frequency modulation in the known way a triangular modulation shape can be used instead of a sinusoid shape, which results in that the amplitude of the overtones of the modulation frequency after the mixer of the receiver will not longer follow Bessel functions of the first kind but instead other functions, which in their appearance resemble the Bessel functions of the first kind but which has regions decreasing more rapidly with the distance, i.e. the envelopes of the obtained functions increase more rapidly with the distance than the envelopes of the corresponding simple Bessel functions. If according to the discussion above linear combinations of different tones of the functions are created in the receiver, which functions arise when the transmitted frequency modulated signal for triangular modulation is mixed with the received reflected signal, further improvements as to the dependency on the distance can be obtained.

In the purpose of even more safeguard, that in the proximity fuse application ignition pulses are triggered at incorrect distances in the case where interferences in the shape of repeating interfering transmitters exist, the transmitted signal can be modulated by a modulation signal having a frequency varying in time, such as that the frequency or phase of the modulation signal is controlled by a noise signal. As an alternative thereto the modulation frequency can be changed with time according to some predetermined, more or less complicated pattern, which is hard to predict.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of nonlimiting embodiments presented hereinbelow with reference to the accompanying drawings, in which:

Fig. 1 is a block diagram of a radar device in a proximity fuse,
Fig. 2 is a block diagram of an alternative radar device in a proximity fuse,
Fig. 3a is a diagram showing two Bessel functions of the first kind,
Fig. 3b is a diagram showing curves of the absolute value of the Bessel functions in Fig. 3a,
Fig. 3c is a diagram showing a weighted difference of the two curves in Fig. 3b,
Fig. 4a is a diagram showing two other functions, which are another kind and resemble Bessel functions,
Fig. 4b is a diagram showing curves of the absolute value of the functions in Fig. 4a,
Fig. 4c is a diagram showing a weighted difference of the two curves in Fig. 4b,
Fig. 5a is a diagram showing two linear combinations of Bessel functions,
Fig. 5b is a diagram showing curves of the absolute value of the functions in Fig. 5a,
Fig. 5c is a diagram showing a weighted difference of the two curves in Fig. 5b,
Fig. 6a is a diagram showing two linear combinations of functions which are the kind illustrated in Fig. 4a,
Fig. 6b is a diagram showing curves of the absolute value of the functions in Fig. 6a,
Fig. 6c is a diagram showing a weighted difference of the curves in Fig. 6b,
Figs. 7a is a diagram showing examples of wave forms, which can be used in triangular and saw tooth shaped modulation respectively, and
Figs. 8a and 8b are diagrams showing examples of control signals to coherent detectors.

DETAILED DESCRIPTION

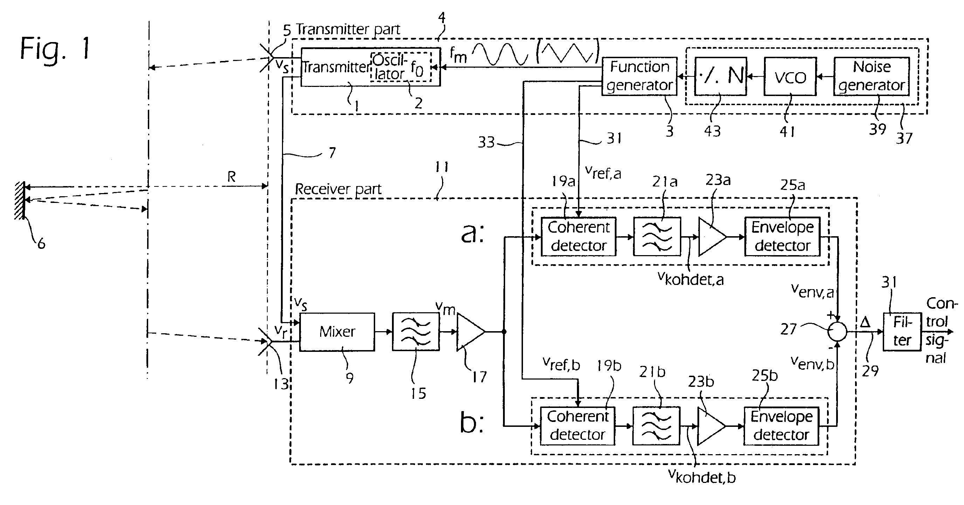

In Fig. 1 a radar device for determining the distance of a target is shown as a block diagram. In a transmitter 1 is generated, in an oscillator 2 included therein, a periodic signal having a base or carrier frequency $f_0$ suitably within the microwave range (typically 1 - 3 GHz) and this signal is frequency modulated by means of a signal from a function generator 3, such as by making the signal directly control the frequency of the oscillator 2, which can be the type VCO. Furthermore, an antenna 5 is included in the transmitter part 4 of the radar device, the antenna being connected to the transmitter 1. On the antenna 5 the frequency modulated signal is issued as an electromagnetic wave in order to be reflected against an intended target indicated at 6.

The same signal, which is issued, is also directly transferred as a leak signal on a line 7 as a first input signal to a mixer 9, which is arranged in the receiver part 11 of the radar installation. Electromagnetic waves including that wave, which is constituted by the wave which is issued and then is reflected by some target 6, together with various other waves such as noise and similar things are received by an antenna 13 in the receiver part 11. The electric signal received by the antenna 13 is conducted as a second input signal to the mixer 9. The output signal of the mixer 9 is then transferred to a bandpass filter 15 and thereupon to an amplifier 17.

Thereupon the further signal processing in the receiver part 11 is executed in two parallel channels, illustrated at a and b. These channels comprise each a coherent detector 19a and 19b, which each are followed by a bandpass filter 21a and 21b. After them amplifiers 23a and 23b and envelope detectors 25a and 25b are arranged.

The respective signals output from the two envelope detectors 25a and 25b are then both conducted to a difference forming device 27 in which the difference of the two output signals is produced in a predetermined, weighted way. The difference forming device 27 provides an output signal on a line 29, which output signal is used, such as after suitable processing, for example after filtering in a filter 30 or after passing a discriminator, not shown, in the further signal processing, such as for determining the time, when the radar device, if it is used as a proximity fuse, is to provide its ignition pulse.

In this first preferred embodiment, which is illustrated by the block diagram in Fig. 1, in a first case the transmitter 1 is assumed to be frequency modulated by a sinusoid signal wave. Thus the function generator 3 is assumed to provide a sinusoid output signal having a frequency $f_m$, with which the signal having the carrier frequency $f_0$ is modulated, which is to be transmitted on the antenna 5. The transmitted electromagnetic wave is reflected by some reflecting surface of an intended target 6, which is located at a distance R, which one wants to find, from the antennas 5 and 13. The transmitted and reflected signal is after a period of time corresponding to the propagation time of the wave received by the receiving antenna 13, which, if desired, can be identical to the transmitter antenna 5. This condition can also be termed in the way that some delay T exists between the corresponding electric signals, which are fed to the mixer 9. This delay T is proportional to the distance R from the antennas 5 and 13 to the target 6 according to the relation T = 2R/c, where c is the velocity of light. Furthermore, if the antennas 5, 13 move in relation to the target 6, the frequency of the signal is offset by an amount equal to the Doppler frequency.

The signal received on the antenna 13 and the signal, which has been transferred directly from the frequency modulated transmitter 1 through the line 7 to the receiver 11, are thus both conducted to the mixer 9 in order to be mixed in a suitable way therein. The signal output from the mixer 9 is then conducted to the bandpass filter 15, which is designed to filter away interfering signals and other, non desired signal components, such as the carrier frequency. The bandpass filter 15 is then designed to let frequencies through up to and including the highest desired overtone of the modulation frequency, e.g. up to and including the sixth overtone, i.e. the upper limit frequency of the filter can be located at 6.5 $f_m$, but suppresses signals above this frequency. The lower limit frequency is selected, so that frequencies corresponding to the lowest calculated Doppler frequency do not vanish. From the bandpass filter 15 the filtered signal is conducted to an amplifier 17 and is amplified therein to a level suited for the continued processing. The signal processing is then made in parallel in the parallel channels a and b respectively.

First in these parallel channels a coherent detection is made in the blocks 19a and 19b. The coherent detectors in these blocks 19a and 19b use as reference signals $v_{ref,a}$ and $v_{ref,b}$, which arrive on lines 31 and 33 respectively from the function generator 3 in the transmitter part 4 of the radar installation. The control signals $v_{ref,a}$ and $v_{ref,b}$ respectively consist of a sum of sine tones, which have predetermined phase positions and amplitudes. These sine tones have frequencies, which are multiples of the modulation frequency $f_m$. In the simplest case they consist only of a single sine tone. Examples of sums of sine tones are given by Eq. (12c) hereinbelow.

Thereupon bandpass filtering of the coherently detected signals is made in the two filters 21a and 21b. These bandpass or Doppler filters 21a and 21b let signals through around the desired Doppler frequency band, the Doppler frequency $f_d$ being calculated by means of the relation $f_d = 2v/\lambda$. The pass bands of the filters are adapted to the variation of the relative velocity v, which exists when one desires to detect the distance. For small relative velocities lowpass filters can be used. Furthermore, the modulation frequency $f_m$ is selected, so that the upper limit frequency of the Doppler filters of 21a and 21b is smaller than half the modulation frequency, i.e $< 1/2 \cdot f_m$. Typically the modulation frequency $f_m$ can thus be one hundred to several hundreds of kHz, e.g. 150 kHz, whereas the Doppler frequency can be located in the range of about some kHz to several tens of kHz for the proximity fuse application, when a projectile moves towards a target.

The filtered signals are amplified in the amplifiers 23a and 23b respectively. Thereupon the amplified signals are conducted to the envelope detector 25a and 25b respectively, in which a rapidly periodically varying dependency on the distance is removed, which originates from the fact that the antenna rapidly approaches the reflecting surface. The signals output from these two envelope detectors 25a and 25b, i.e. the envelopes of the signals, which exist on the outputs of the bandpass filters 21a and 21b respectively, are then provided as input signals to the summing device 27. The summing device 27 is arranged, so that the signal from the channel b is given an inverted sign, whereby the output signal from the summing device 27 actually becomes a difference of the two input signals. By means of this generation of a difference, using suitable control signals and weights it can be obtained, that the output signal obtains a well confined distance range, in which it has a positive sign, which is called the target detection range. Outside this range the different signals have a negative sign or very small positive values and a target detection can therefore effectively be suppressed outside this range, as will be demonstrated hereinbelow.

Furthermore, in the summing device 27, as has been indicated above, an amplifying of the two input signals can be made, which can be different for the respective input signal. Thereby an arbitrary weighted difference of the two input signals can be produced. A weighting can also be obtained by the fact that the components in each branch, for example the amplifiers 23a and 23b, are designed to have different amplifications or attenuation, but it is naturally advantageous to the accuracy of the result, if the two channels can be constructed to comprise exactly identical components. The relatively delicate signal processing in the channels then provides directly comparable resulting signals and an optimization can be made by only changing the weighting balance in the difference forming device 27.

Using this construction it is obtained, that functions which do not only use $J_0$ and $J_2$, can be used for forming a linear combination in a channel. In a channel an arbitrary linear combination of tones corresponding to amplitudes of different Bessel functions can be detected. This results in, possibly together with the fact that more than two channels are used, what of course requires a more complicated production of a difference or a sum of the resulting signals, that a signal having a steep characteristic, i.e. having monotonously, strongly increasing positive values for decreasing distances from the target and including very small positive peaks outside the proximity region of the target can be obtained at the output terminal of the summing device, so that the risk that a charge is triggered owing to the fact that an incorrect distance has been measured is made considerably smaller. Using suitable control signals to the coherent detectors only a simple difference has to be formed in the summing device 27.

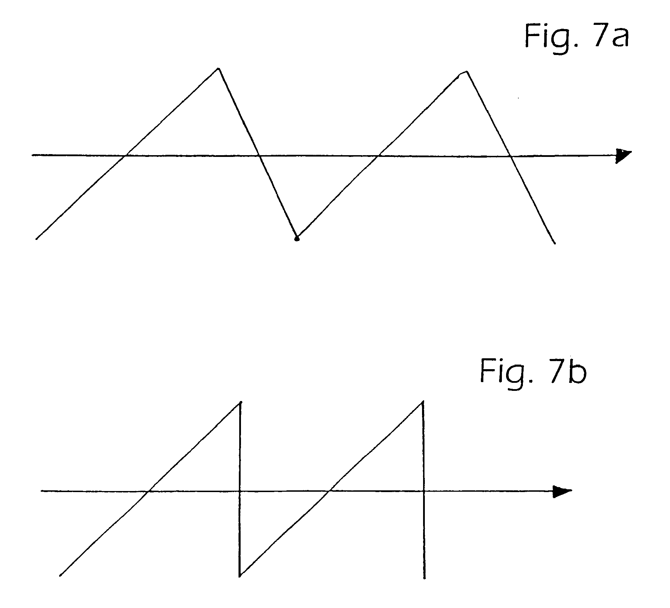

In the purpose of further improving the suppression of the side lobes of the obtained functions, which are constituted by Bessel functions according to the discussion above, which side lobes increase with distance, i.e. in order to achieve, that the peaks of the obtained functions beside the main lobe are kept as small as possible, one can instead of modulating the transmitter signals sinusoidally use triangular modulation, as is proposed in e.g. the U.S. patent cited above. An example of the signal shape used in triangular modulation is illustrated by the curve in the diagram in Fig. 7a, in which a somewhat asymmetric triangular shape is shown, which has decreasing rectilinear portions, which are somewhat steeper than the increasing rectilinear portions.

In the case where this form of modulation is used, the amplitudes of the tones in the signal spectrum, which the signal after the mixer 9 has, do not any more follow the Bessel functions of the first kind, $J_n$. Instead the amplitudes are functions of another type, which in their appearance resemble the Bessel functions but among other things, which in this application is of great importance, differ from them by the fact that their side lobes in relation to the main lobe decrease more rapidly with the distance than in the corresponding case for usual Bessel functions.

Furthermore, it turns out, see also in this case e.g. the above-cited U.S. patent, that also sawtooth modulation results in functions, the side lobes of which in relation to the main lobe decrease more rapidly than the side lobes of the corresponding Bessel functions in relation to the respective main lobe. Thus also sawtooth modulation could advantageously be used. An example of the modulation function used in sawtooth modulation is illustrated by the curve in Fig. 7b, which has rectilinear decreasing portions, which are practically perpendicular to the time axis.

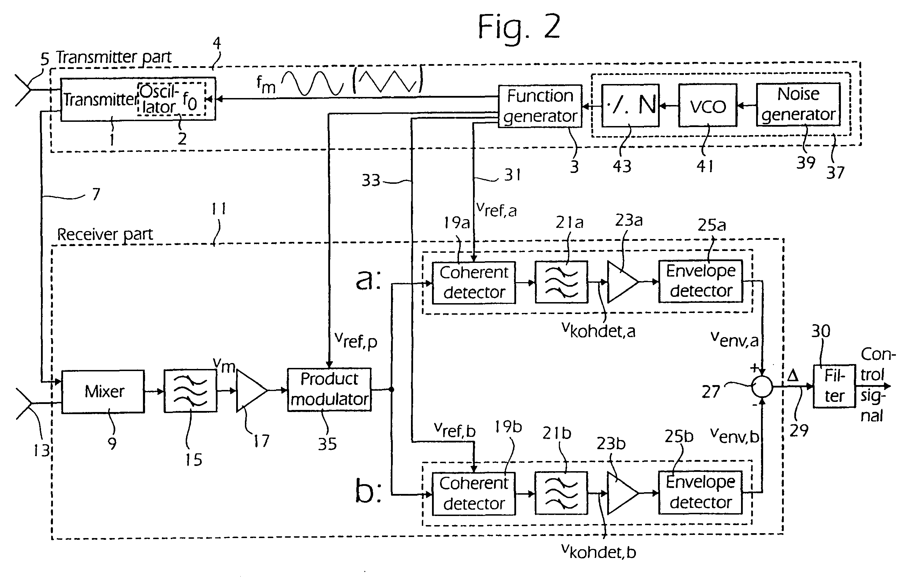

In Fig. 2 another preferred embodiment is illustrated. This embodiment agrees in its general construction with the embodiment illustrated in Fig. 1 except that a product modulator 35 is arranged between the output of the amplifier 17, which is connected after the mixer 9, and the division into channels. The individual included components can however be different in the two embodiments.

The product modulator 35 is introduced in the purpose of concentrating the power spectrum of the obtained signal. It is made in such a way that the output signal of the mixer, the power spectrum of which consists of peaks around the modulation frequency and multiples thereof, by product modulation with a suitable signal, e.g. a tone having a frequency equal to the modulation frequency $f_m$, is modulated in order that thereby a signal will be obtained having a power spectrum, which has a larger portion of its energy around those frequencies which are to be filtered out in the following signal processing. To the spectrum of the signal thus no new frequencies are added, but only a redistribution of the power of the frequencies included in the spectrum is made.

The product modulator 35 can be implemented as a coherent detector, the reference signal $v_{ref,p}$ of which is related to the modulation frequency $f_m$ and the overtones thereof.

As a reference signal to the product modulator 35 in this embodiment the signal $v_{ref,p}$ is used, which in the same way as the signals $v_{ref,a}$ and $v_{ref,b}$ is generated by the function generator 3 in the transmitter part 4 of the installation and which is transferred to the product modulator 20 on a line 37. The signal $v_{ref,p}$ consists in the general case of a sum of different sine tones having predetermined phases and predetermined amplitudes, and these sine tones in the signal spectrum of the signal $v_{ref,p}$ have frequencies, which are multiples of the used modulation frequency $f_m$, see also here-inbelow.

In this embodiment also the signal spectra of the control signals $v_{ref,a}$ and $v_{ref,b}$, which are used in the coherent detection in the detectors 19a and 19b, are more restricted, e.g. only one sine tone having a suitable phase position has to be used, than when using the corresponding detection in the embodiment, which has been described in conjunction with Fig. 1. These signal spectra each comprise in this embodiment preferably only one frequency, and these frequencies for the different control signals can be different multiples of the modulation frequency, so that the two control signals $v_{ref,a}$ and $v_{ref,b}$ are different overtones of the modulation signal. In an embodiment these control signals $v_{ref,a}$ and $v_{ref,b}$ represent the double and the fourfold modulation frequency $f_m$ respectively.

Generally it can be said that the control signals for the purpose which is here aimed at, i.e. that the output signal of the summing device 27 for such distances d, which are longer than a distance somewhat exceeding the distance, at which the charge is to be triggered, shall have as small absolute values as possible or generally all the time be as near a constant value, the zero level, as possible, should be selected either, so that both are odd multiples of the modulation frequency $f_m$ or so that both of them are even multiples of the modulation frequency $f_m$. It can also be advantageous, in order to achieve that the positive values in the isolated regions for larger distances will be as small as possible, to use, as has been indicated above, the signal strengths around more than two signals in the signal spectrum and then to form, by means of the summing device 27, a weighted difference thereof. In this case more channel branches than two can be used in order to produce more tones in the spectrum. The most interesting linear combination of the tones of the output signal of the mixer is as above produced by means of the product modulation and the coherent detection and the choice of control signals thereto.

In a third preferred embodiment, which is a development of the two embodiments described in conjunction with Figs. 1 and 2, the function generator 3 is controlled by an auxiliary unit 37 for a suitably rapid, random variation of the frequency of the modulation signal, however the magnitude of the modulation being maintained constant. The auxiliary unit 37 can as an essential element comprise a noise generator 39. It can consist of an analogous noise source, the signal of which is filtered in a suitable bandpass filter, or of a pseudo-random generator, e.g. in the shape of a shift register which is connected to use feedback in a suitable way and which is clocked by a suitable frequency. The output signal from the noise generator 39 controls a voltage controlled oscillator 41, VCO ("Voltage Controlled Oscillator"). The output signal then obtained is divided by a factor N in a block 43 and in the function generator 3 the complete modulation signal is generated. In the block 3 as above the multiples of the modulation frequency are generated, which are required for the control signals $v_{ref,a}$, $v_{ref,b}$ and $v_{ref,p}$ respectively.

The advantage of this embodiment is, that the modulation is not any longer totally periodic, as seen over time intervals having a relatively large length in the considered situation, and thus changes its period time or equivalently thereto its frequency all the time, so that it however at each instant can be assumed to have a definite frequency $f_m(t)$, which is a function of the time t. It results in that for example a repeating interfering transmitter cannot any longer produce false ignition pulses. By the fact that the issued signal and the overtones thereof are all the time used as reference signals in the coherent detectors 19a and 19b and in the product modulator 20 respectively the receiver part 11 will all the time work in the same rate as the transmitter part 4.

In the purpose of providing a better understanding of the radar installation the operation thereof will now also be mathematically described.

The signal issued from the transmitter 5 of the radar installation is assumed to be frequency modulated by a periodic or near-periodic signal f(t). The signal issued by the antenna 5 can then be described by

$$v_s(t) = A \cdot \sin[\omega_0 t + \phi(t) + \phi_0] \tag{1}$$

where the phase modulation $\phi(t)$ is given by

$$\phi(t) = 2\pi \int_0^t f(\tau)d\tau \tag{2}$$

and $\omega_0$ is the angular frequency of the carrier wave, which is equal to $2\pi f_0$, and $\phi_0$ is a phase constant.

The signal received by the antenna 13 from a target reflector 6 at the distance R is delayed by the time T = 2R/c, and can then be written

$$v_r(t) = B \cdot \sin[\omega_0(t - T) + \phi(t - T) + \phi_0] \qquad (3)$$

After having passed the mixer 9 and the bandpass filter 15 the signal is

$$v_m(t) = C \cdot \cos[\omega_0 T + \phi(t) - \phi(t - T)] \qquad (4)$$

If the phase modulation is periodic, also $v_m(t)$ is periodic and can be developed in a Fourier series. The corresponding expansion can be approximately made for near-periodic modulation provided that the deviations from the periodic modulation have a time constant, which is much larger than the period time of the frequency modulation.

The deviation from a completely periodic phase modulation can be included in Eq. (1), if $\phi_0$ is replaced with $\phi_b$(t) in Eqs. (1) and (2). The output signal of the mixer is in this case

$$v_m(t) = C' \cdot \cos[\omega_0 T + \phi(t) - \phi(t - T) + \Delta\phi_b(t,T)] \qquad (4a)$$

where $\Delta\phi_b(t,T) = \phi_b(t) - \phi_b(t - T)$

By selecting $\phi_b(t)$ in some suitable way it is obtained that $\Delta\phi_b(t,T) \to 0$ or $\approx 0$, when the measuring distance R is short. This condition is satisfied in the proximity fuse application. At long measuring distances or for repeating interfering transmission at longer distances the phase noise modulation $\phi_b(t)$ will in contrast have a full effect. A purpose of the radar installation is thus to achieve a neglectable influence of the noise modulation within a proximity region of the target, the noise modulation at the same time strongly distorting the response from repeating interfering transmitters at longer distances.

For symmetric triangular modulation using the modulation frequency $f_m$ and the frequency swing $\Delta f$ for the bandpass filtered output signal of the mixer is obtained

$$v_m(t) = C \cdot \{\cos(\omega_0 T)A_0(X) + \\ + 2\cos(\omega_0 T) \cdot \Sigma A_{2k}(X) \cdot \cos[2k(2\pi f_m t - \phi_m)] - \\ - 2\sin(\omega_0 T) \cdot \Sigma A_{2k-1}(X) \cdot \cos[(2k - 1)(2\pi f_m t - \phi_m)]\} \qquad (5)$$

where $\phi_m = \pi f_m T = 2\pi f_m R/c$ and

$$A_n(X) = 2X \cdot \sin[\pi(X - n)/2]/[\pi(X^2 - n^2)] \qquad (6)$$

In the proximity fuse application the modulation frequency $f_m$ is selected to be so low, that the phase angle $\phi_m \approx 0$ in the distance interval of interest.

The argument X is related to the distance R of the reflector and the frequency swing $\Delta f$ according to

$$X = 4\Delta f R/c \qquad (7)$$

For sinusoidal frequency modulation using

$$f(t) = (\Delta f/2)\cos(2\pi f_m t) \qquad (8)$$

a similar expression is obtained for the bandpass filter output signal of the mixer, if in formula (5)

the coefficients $A_{2k}(X)$ are replaced by $(-1)^k J_{2k}(X)$ and

the coefficients $A_{2k-1}(X)$ are replaced by $(-1)^k J_{2k-1}(X)$,

where $J_n$ denotes Bessel functions of the first kind and the argument X instead is given by

$$X = 2\pi\Delta fR/c \qquad\qquad (9)$$

The appearance of the functions $J_n(X)$ and $A_n(X)$ is seen in Figs. 3a and 4a respectively for the values n = 0 and n = 2, in which the curve for n = 0 is drawn in a solid line whereas the curve for n = 2 is drawn using a dashed line. A frequency swing $\Delta f$ = 10 MHz is assumed. It should be observed that the unit X on the ordinate axis in different ways depends on the target distance R. As appears thereof, considering the different graduation on the ordinate axis, $A_0(X)$ and $A_2(X)$ have approximately as well confined main lobes as $J_0(X)$ and $J_2(X)$ respectively, i.e. their first lobe or region having the first extreme value, when X increases from zero to positive values, have approximately equally large extensions in the X-direction, as appears from the diagrams of the absolute values in Figs. 3b and 4b. In contrast, $A_0(X)$ and $A_2(X)$ have lower side lobes decreasing more rapidly with the distance than the Bessel functions $J_n(X)$, i.e. the extremal values for $A_0(X)$ and $A_2(X)$ for higher X-values have smaller absolute values than the absolute values of the extremal values within the corresponding regions of $J_0(X)$ and $J_2(X)$ respectively. The corresponding is also true for other values of n, i.e. $A_n(X)$ has generally an approximately equally well confined main lobe (the lobe closest to X = 0) and lower side lobes. For this reason triangular modulation is to be preferred to sinusoidal modulation and triangular modulation will produce a better result, if it for example is applied in the procedure described in the above-cited Swedish patent application for Saab-Scania AB. In Fig. 4c a weighted difference having the same weighting factor d as in Fig. 3c of the functions $|A_0(X)|$ and $|A_2(X)|$ is shown, i.e. $|A_0(X)| - 1,5\cdot|A_2(X)|$ is here shown, from which the advantage of triangular modulation clearly appears.

Generally one can synthesize new functions having desired properties by detecting coherently individual tones in each channel for a number of different selected frequencies $kf_m$, where k are selected as different non-negative integers, k = 0, 1, 2, ..., and then for sinusoidal modulation form a linear combination of the amplitudes of the detected tones

$$F(X) = {}_k\Sigma a_k J_k(X) \qquad\qquad (10a)$$

where the sum is taken over the selected k-values and the coefficients $a_k$ are selected in a suitable way. In the corresponding way for triangular modulation a suitably selected linear combination

$$F(X) = {}_k\Sigma a_k A_k(X) \qquad\qquad (10b)$$

is selected.

What is tempted at, when the radar installation is used as a proximity sensor, i.e. for detecting small short distances, is that the value of the signals will be large within a limited distance interval from the target and that the signal values outside this interval should be as small as possible. In the block diagram of the radar installation according to Fig. 1 one can primarily effect the selection of tones, which are combined, and then the distance dependency of the output signals of the channels by selecting different control signals $v_{ref,a}$, $v_{ref,b}$ to the coherent detectors 19a and 19b, see hereinbelow.

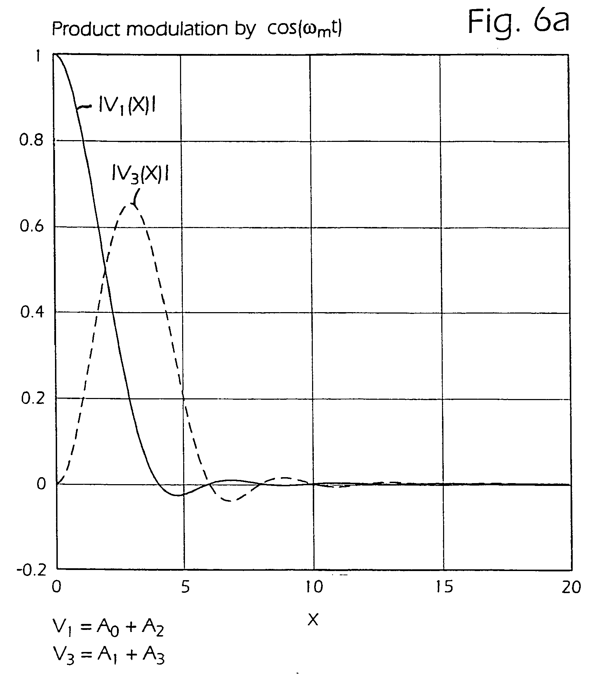

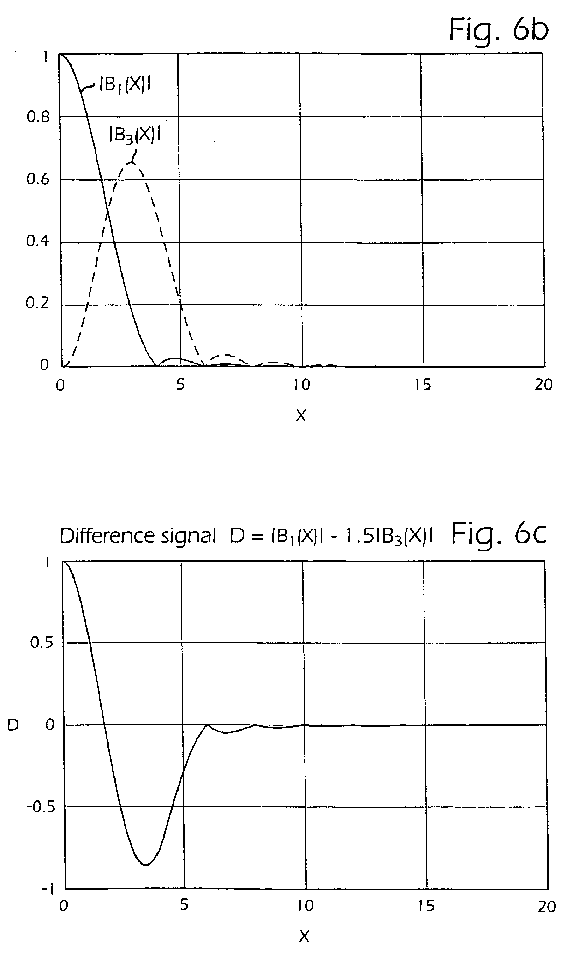

By studying Figs. 4a and 4b and the corresponding curves $A_k(X)$ and $|A_k(X)|$ for other integer values k it is realized, that a side lobe suppression better than for the individual functions $A_n(X)$ can be obtained already by adding two functions $B_k(X) = A_{k-1}(X) + A_{k+1}(X)$, i.e. using only two terms in the sum according to (10b), which are given the same weight. In that way the detection in a channel will approximately correspond to the total detection (observe that $|J_0| - |J_2| = J_0 + J_2$ within a limited interval near the distance of zero) according to the cited Swedish patent application for Saab-Scania AB, even if there a sinusoidal modulation is used. In Fig. 6a the obtained linear combination for k = 1, the curve $B_1$ drawn in a solid line, and k = 3, the curve denoted by $B_3$ drawn in a dashed line, is shown. In Figs. 6b and 6c the curves are illustrated, which are obtained from these in the same way as the curves in Figs. 4b and 4c have been obtained from Fig. 4a, i.e. in Figs. 6b and 6c the absolute values $|B_0(X)|$ and $|B_2(X)|$ and the weighted difference $|B_0(X)$

| - 1.5·|$B_2(X)$| respectively are shown. A better confined main lobe is obtained and side lobes having reduced amplitudes are obtained in the difference signal compared to the curve in Fig. 3c.

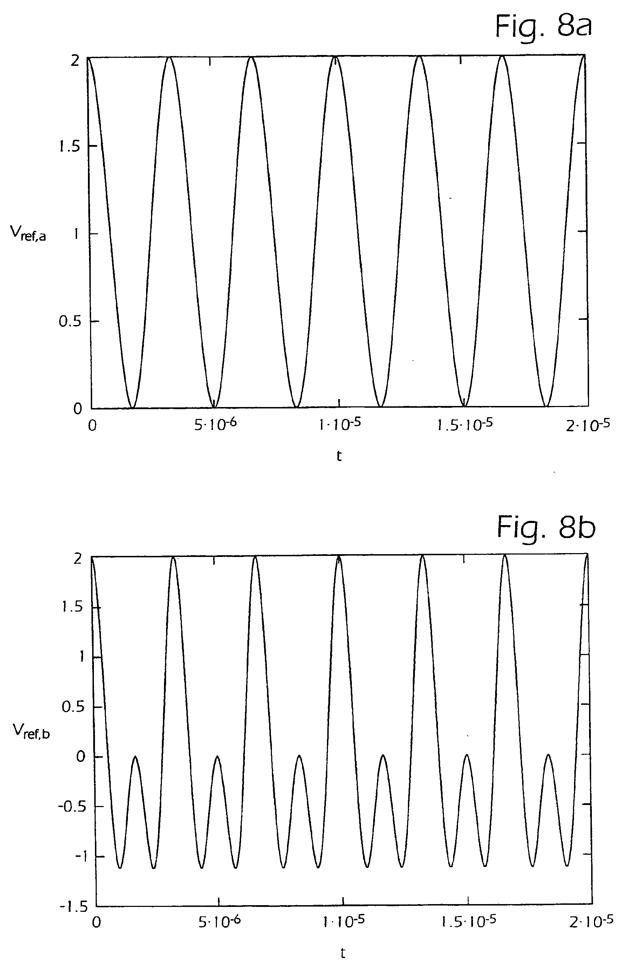

In Fig. 8a and 8b the control signals $v_{ref,a}$ and $v_{ref,b}$ are shown, which are to be used in this case for extracting $B_1$ and $B_3$, when the embodiment according to Fig. 1 not employing product modulation is used. The curves are drawn for the modulation frequency $f_m$ = 150 kHz. According to the discussion above then the following relation is true for the control signals (k = 1 and k = 3):

$$v_{ref,a} = \cos(0·2\pi f_m t) + \cos(2·2\pi f_m t) = 1 + \cos(2·2\pi f_m t)$$

$$v_{ref,b} = \cos(2·2\pi f_m t) + \cos(4·2\pi f_m t)$$

In Fig. 5a curves are shown corresponding to those in Fig. 6a for sinusoidal modulation, i.e. curves which have been obtained by adding two Bessel functions, and there thus the curves $C_k(X) = J_{k-1}(X) + J_{k+1}(X)$ for k = 1 for the curve denoted by $C_1$ drawn in a solid line and for k = 3 for the curve $C_3$ drawn in a dashed line. In Figs. 5a and 5c is shown in a way analogous to Figs. 3a and 3b the absolute values |$C_0(X)$| and |$C_2(X)$| and the weighted difference |$C_0(X)$| - 1,5·|$C_2(X)$|. A somewhat better confined main lobe is obtained and considerably lower side lobes are obtained in the difference signal compared to the curve in Fig. 3c.

The obtained improvement in the selected example can also be demonstrated analytically for sinusoidal modulation, since the following mathematic relation is true

$$J_{k-1}(X) + J_{k+1}(X) = (2k/X)J_k(X) \tag{11}$$

When X increases, thus the sum decreases more rapidly than the individual Bessel functions, the envelope of which decreases asymptotically as $X^{-1/2}$.

Similar results can be derived for triangular modulation, if starting from Eq. (6).

From Eq. (5) it is realized that one can also produce the function $B_k(X)$ for the case of triangular modulation by multiplying the output signal from the mixer 5 with the following signal, which can be performed in the product modulator 36 in the embodiment according to Fig. 2:

$$v_{ref,p}(t) = \cos(2\pi f_m t) \tag{12a}$$

followed by a coherent detection at the k:th overtone of the modulation frequency (i.e. $kf_m$). In the corresponding way is obtained for the case of sinusoidal modulation $C_k(X)$ by multiplying by

$$v_{ref,p}(t) = \sin(2\pi f_m t) \tag{12b}$$

In the case of triangular modulation of course directly from the output signal $v_m(t)$ of the mixer 9 according to Eq. (5) $B_k(X)$ can be extracted, if one instead of a single sinusoidal control signal $v_{ref,a}$, $v_{ref,b}$ to the coherent detector 19a, 19b uses a sum of tones having equally large coefficients

$$v_{ref,a,b}(t) = \cos[(k - 1)2\pi f_m t] + \cos[(k + 1)2\pi f_m t] = 2·\cos(2\pi f_m t)·\cos(2\pi k f_m t) \tag{12c}$$

i.e. a sum of two (co)sine functions, where different values of k are to be selected for the channels. This can be generalized, so that a set of new functions G(X) can be formed, which depend on the normalized distance X, by using a control signal to the coherent detectors 19a, 19b, which is a linear combination of overtones. In order to avoid a simultaneous depend-

ency on $\cos(\omega_0 T)$ and $\sin(\omega_0 T)$ in Eq. (5) one should use only even or odd overtones when forming this linear combination.

The control signal

$$v_{ref,a,b}(t) = 2[a_0 + a_1\cos(\omega_m t) + a_2\cos(2\omega_m t)]\cos(2k\omega_m t) \qquad (13a)$$

where k is an integer, so that 2k corresponds to k in Eq. (12c), can for example be used to each coherent detector, where $\omega_m$ is the angular frequency, which corresponds to the modulation frequency $f_m$ and where different values of k are selected for each detector. From the relation (5) for $\phi_m = 0$ for triangular modulation after a Doppler filter 23a, 23b is obtained, when the control signal according to 13a is used:

$$v_{kohdet,a,b} = 2a_0 A_{2k}(X)\cos(\omega_0 T) -$$
$$- a_1[A_{2k-1}(X) + A_{2k+1}(X)]\sin(\omega_0 T) +$$
$$+ a_2[A_{2k-2}(X) + A_{2k+2}(X)]\cos(\omega_0 T) \qquad (13b)$$

The distance dependency of the signal is here represented by both X and T. The dependency on T is then filtered away in the envelope detectors 23a, 23b, since for usual approaching velocities v the time dependency of $\omega_0 T$ is much more rapid compared to X. Here either $a_1 = 0$, so that only the even distance functions give a contribution after the envelope detection, or $a_0 = a_2 = 0$, and then Eq. (13a) is equivalent to Eq. (12a), should be selected. If $\cos(2k\omega_m t)$ is replaced by $\cos[(2k - 1)\omega_m t]$ in Eq. (13a), instead for $a_1 = 0$ the corresponding combination of adjacent odd tones is formed.

If terms comprising $\sin(\omega_0 T)$ and $\cos(\omega_0 T)$ are included at the same time, the detected voltage $v_{kohdet,a,b}$ in (13b) will be more indefinite, when $\omega_0 T$ varies. This becomes still more apparent for the case, when several simultaneous reflections exist. If the difference of two envelopes formed from functions of type (13b) is taken, where both $\sin(\omega_0 T)$ and $\cos(\omega_0 T)$ are included, these functions do not obtain zeroes for the same values of $\omega_0 T$, which becomes embarrassing for e.g. the desired appearance of the distance function for the application as a proximity sensor, when it is required, that the difference signal > 0 for $X < X_0$, where $X_0$ is a not too small distance value, and all values of $\omega_0 T$ are in the interval [0 - 2$\pi$].

The control signals mentioned above to the coherent detector 19a, 19b are only examples of the large extent to which one can influence the appearance of the distance functions in the demodulation by using a linear combination of odd or even overtones of the modulation frequency as a control signal.

More generally the control signal of the coherent detectors 19a, 19b for different k-values for the different channels is

$$v_{ref,a,b} = {}_n\Sigma a_n\cos(2\pi n f_m t)\cos[2\pi k f_m t] =$$
$$= (1/2)_n\Sigma a_n\{\cos[(k - n)2\pi f_m t] + \cos[(k + n)2\pi f_m t]\} \qquad (14)$$

where the sum is taken for values of n, which are either a selection of only even integers 0, 2, 4, ... or of only odd integers 1, 3, 5, ...

From Eqs. (12c), (13a) and (14) it is realized, that one can also execute the procedure in two steps according to the embodiment in Fig. 2:

a) first a product modulation of the mixer signal using $v_{ref,p}(t) = {}_n\Sigma a_n\cos(2\pi n f_m)$ as a control signal and thereupon
b) detecting the signal components which are then newly formed and which are dependent on the distance, at the overtone $kf_m$ by coherent detecting using $\cos(k\omega_m t)$ as a control signal $v_{ref,a}$ and $v_{ref,b}$ to the detector 19a and 19b respectively using different k-values for the respective detector.

From Fig. 5c (compare also Fig. 3c), for the case of sinusoidal modulation the improvement of the side lobe suppression is observed, which is obtained using the procedure described above comprising the reference signal $v_{ref,p} = \sin(2\pi f_m t)$ fed to the product modulator 35. The corresponding improvement appears from Fig. 6c compared to Fig. 4c for a case of triangular modulation and the reference signal $v_{ref,p}$ according to Eq. (12a).

From Figs. 3c, 4c, 5c and 6c, in which a sinusoidal modulation is shown in Figs. 3c and 5c and triangular modulation is shown in Figs. 4c and 6c, it appears that a demodulation according to what has been proposed above including detecting at least two frequencies in each channel combined with triangular frequency modulation strongly improves the performance which has been previously obtained. Also, sawtooth modulation gives similar improvements of the side lobe suppression. The method described above furthermore gives a large freedom in influencing the appearance of the distance functions by means of the signal processing in the receiver by for example influencing the side lobe suppression as has been demonstrated above.

The method as described above comprising that at least two frequency components are detected in each channel can also be used in other radar applications in order to synthesize, using Eq. (10), output signals having completely different properties in regard of a desired distance dependency.

The signal processing can also be performed digitally, wherein the actual signals are first A/D-converted. In the digital signal processing, in the general case including product modulation for detecting the k:th overtone

$$v_{kohdet,a,b}(t) = {}_{o}\int^{T} v_m(t - \tau) v_{ref,a,b}(t - \tau) v_p(t - \tau) d\tau \qquad (15)$$

is used, where $v_m(t)$ is the signal after the mixer, $v_{ref,a,b}(t)$ is the control signal used in the coherent detection for channel a and b respectively and $v_p(t)$ corresponds to the product modulation signal and where $v_{kohdet,a,b}$ according to the above corresponds to the output signal of the coherent detectors after filtering.

Since $v_{ref,a,b}(t)$ and $v_p(t)$ in the general case are linear combinations of signals having frequencies corresponding to the modulation frequency $f_m$ and overtones thereof one can also implement the algorithm as a procedure consisting of three steps:

a) First the different tones $A_k(X)$ according to Eq. (5) are coherently detected in the frequency spectrum.
b) Then a linear combination is formed, which has desired properties according to the discussion above, by:

$$F_k(X) = {}_k\Sigma a_k A_k(X) \qquad (16)$$

c) Finally a continued signal processing is executed, for example in the shape of envelope detection followed by producing a difference of two of the tones, as is illustrated by Figs. 5c and 6c, which according to the discussion above show the results of forming a difference of envelopes of the signals obtained in the two channels.

The discrete fourier transforms (DFT), which are calculated in conjunction with the spectral detection in the step (a), can advantageously, in particular in the case where many tones are used in the steps b) and c), be performed by means of some suitable algorithm such as of the type Fast Fourier Transform (FFT).

**Claims**

1. A device for determining distances by means of electromagnetic waves, the device comprising:

- a transmitting part (4) having a transmitter (1) arranged to provide a transmitter signal ($v_s$), the frequency of which is modulated by a modulating signal having a modulation frequency ($f_m$),
- a receiving part (11) comprising a mixer (9) for mixing a portion of the transmitter signal directly transferred from the transmitting part to the receiving part with an echo signal ($v_r$) received from a reflecting surface (6),
- two parallel signal processing channels (a, b) connected to the mixer to receive signals from the mixer,

- - a first one of the two parallel signal processing channels arranged to detect, in the signals received from the mixer, signals around first frequencies, and
- - a second one of the two parallel signal processing channels arranged to detect, in the signals received from the mixer, signals around second frequencies,

so that from each of the parallel signal processing channels a detected signal is obtained, and
- an evaluation circuit (27, 31), inputs of which are connected to outputs of the two parallel signal processing channels to receive the detected signals, the evaluation circuit arranged to generate from the received signals an output signal, which is a measure of the extent to which the detected signals agree with each other,

**characterized in that** the first frequencies comprise only frequencies around even multiples of the modulation frequency ($f_m$) and the second frequencies comprise only signals having frequencies around odd multiples of the modulation frequency, so that one of the first and second parallel signal processing channels is arranged to detect only signals having frequencies around even multiples of the modulation frequency and the other of the first and second parallel signal processing channels is arranged to detect only signals having frequencies around odd multiples of the modulation frequency.

2. A device according to claim 1, **characterized in that** the first frequencies and/or the second frequencies are arranged to comprise only a first multiple of the modulation frequency ($f_m$), therein included the multiple 0, for the first frequencies and a second multiple of the modulation frequency, where the order numbers of the multiples has a difference equal to 2.

3. A device according to any of claims 1 - 2, **characterized by** a product modulator (35) connected in series after the mixer (9) of the receiving part (11) to receive signals from the mixer, the two parallel processing channels (a, b) receiving the signals from the mixer after having passed the product modulator.

4. A device according to claim 3, **characterized by** a reference signal line directly connecting the transmitting part (4) and the product modulator (35).

5. A device according to claim 4, **characterized by** means (3) in the transmitting part (4) for providing via the reference signal line a reference signal ($v_{ref,p}$) comprising a weighted sum of sine signals to the product modulator (35).

6. A device according to claim 5, **characterized in that** the means (3) are arranged to provide reference signals having frequencies, which are multiples of the modulation frequency ($f_m$).

7. A device according to any of claims 4 - 6, **characterized in that** each of the parallel signal processing channels (a, b) is arranged to detect, in the signals received from the product modulator (35), signals having only a single frequency.

8. A device according to any of claims 1 - 7, **characterized in that** each of the parallel signal processing channels (a, b) comprise a coherent detector (19a, 19b).

9. A device according to claim 8, **characterized in that** the coherent detectors (19a, 19b) are arranged to use reference signals ($v_{ref,a}$, $v_{ref,b}$), which originate from and are directly transferred from the transmitting part (4).

10. A device according to claim 9, **characterized in that** the transmitting part (4) comprises means (3) for providing reference signals comprising a weighted sum of different sine signals.

11. A device according to claim 10, **characterized in that** the means (3) are arranged to provide reference signals, which have frequencies, which are multiples of the modulation frequency ($f_m$).

12. A device according to any of claims 1 - 11, **characterized in that** the transmitting part (4) comprises means (3, 37) for producing a modulating signal, the modulation frequency ($f_m$) and/or the phase of which is varying in time.

13. A device according to claim 12, **characterized in that** the means (3, 37) for producing a modulating signal comprises a noise generator (39).

14. A device according to any of claims 1 - 13, **characterized in that** the evaluation circuit comprises a summing device (27), inputs of which are connected to outputs of the parallel signal processing channels (a, b) and which is arranged to generate an output signal, which is a linear combination of the detected signals.

15. A device according to any of claims 1 - 14, **characterized in that** the transmitter (1) comprises an oscillator (2) controlled by a function generator (3), which is arranged to provide a modulation signal having a triangular shape or sawtooth shape, so that in providing the frequency modulated transmitter signal ($v_s$) this is triangularly or sawtooth modulated.

16. A method of determining distances by issuing electro-magnetic waves having a carrier frequency ($f_0$), the method

comprising the steps of:

- producing a modulating signal having a modulation frequency ($f_m$),
- modulating the frequency of a signal having the carrier frequency with the modulating signal to produce a frequency modulated signal ($v_s$),
- issuing the frequency modulated signal as electromagnetic waves,
- receiving an echo-signal of the electromagnetic waves to produce a received signal ($v_r$),
- mixing (9) a leak-signal of the frequency modulated signal with the received signal to produce a mixed signal,
- detecting (a, b) in the mixed signal first signals having frequencies around first frequencies and second signals having frequencies around second frequencies to produce detected signals, and
- generating (27, 30) an evaluation signal from the detected signals,

**characterized in that** in detecting the first and second signals in the mixed signal, the first frequencies are taken to comprise only signals having frequencies around even multiples of the modulation frequency ($f_m$) and the second frequencies are taken to comprise only signals having frequencies around odd multiples of the modulation frequency.

17. A method according to claim 16, **characterized in that** in detecting the first and second signals in the mixed signal, the first frequencies or the second frequencies are taken to comprise only a first multiple of the modulation frequency ($f_m$), included therein the multiple 0, for the first frequencies and a second multiple of the modulation frequency, where the order numbers of the multiples have a difference equal to the number 2.

18. A method according to any of claims 16-17, **characterized by** the additional steps of:

- producing (3) a reference signal ($v_{ref,p}$), and
- product modulating (35) the mixed signal with the reference signal in or before detecting (a, b) the first and second signals.

19. A method according to claim 18, **characterized in that** in the step of producing (3) the modulating signal, the reference signal ($v_{ref,p}$) is also produced.

20. A method according to any of claims 18 - 19, **characterized in that** in the step of producing (3) the reference signal ($v_{ref,p}$), the reference signal is produced to comprise a weighted sum of periodic signals.

21. A method according to any of claims 18 - 20, **characterized in that** in the step of producing (3) the reference signal ($v_{ref,p}$) the periodic signals are selected to have frequencies, which are multiples of the modulation frequency ($f_m$).

22. A method according to any of claims 18 - 21, **characterized in that** in the step of detecting (a, b) the first signals and the second signals, the first signals and/or the second signals are detected by detecting only a single frequency in the signal that has been product modulated (35).

23. A method according to any of claims 16 - 22, **characterized in that** in the step of detecting (a, b) the first signals and the second signals, the first signals and/or the second signals are detected by coherent detection (19a, 19b).

24. A method according to claim 23, **characterized in that** in the coherent detection (19a, 19b), reference signals ($v_{ref,a}$, $v_{ref,b}$) are used, which are produced in the step of producing (3) the modulating signal.

25. A method according to any of claims 23 - 24, **characterized in that** in the step of producing (3) the reference signals the reference signals are produced to comprise a weighted sum of different sine signals.

26. A method according to claim 25, **characterized in that** in the step of producing (3) the reference signals the reference signals are produced to have frequencies which are multiples of the modulation frequency ($f_m$).

27. A method according to any of claims 25 - 26, **characterized in that** in the step of producing (3, 37) a modulating signal the modulation frequency ($f_m$) is produced to be varying in time.

28. A method according to claim 27, **characterized in that** in the step of producing (3, 37) a modulating signal, the modulation frequency is generated by converting (41, 43) a noise signal (39) to a signal having a suitable frequency and power spectrum.

**29.** A method according to any of claims 16 - 28, **characterized in that** in the step of generating an evaluation signal a linear combination of the two detected signals is generated (27).

**30.** A method according to claim 29, **characterized in that** the linear combination is a weighted difference.

**31.** A method according to any of claims 16 - 30, **characterized in that** in the step of producing (3) a modulating signal the modulation signal is produced to have a triangular shape or sawtooth shape.

**Patentansprüche**

**1.** Vorrichtung zum Bestimmen von Entfernungen mittels elektromagnetischer Wellen, wobei die Vorrichtung umfasst:

einen Sendeabschnitt (4) mit einem Sender (1), der derart ausgelegt ist, dass er ein Sendersignal ($v_s$) bereitstellt, dessen Frequenz durch ein Modulationssignal mit einer Modulationsfrequenz ($f_m$) moduliert ist,
einen Empfangsabschnitt (11) mit einem Mischer (9) zum Mischen eines Teiles des von dem Sendeabschnitt an den Empfangsabschnitt direkt übertragenen Sendersignals mit einem von einer reflektierenden Fläche (6) empfangenen Echosignal ($v_r$),
zwei parallele Signalverarbeitungskanäle (a, b), die mit dem Mischer derart verbunden sind, dass sie Signale von dem Mischer empfangen,
wobei der erste von den beiden parallelen Signalverarbeitungskanälen derart ausgelegt ist, dass er in den von dem Mischer empfangenen Signalen Signale um erste Frequenzen herum erfasst, und
der zweite von den beiden parallelen Signalverarbeitungskanälen derart ausgelegt ist, dass er in den von dem Mischer empfangenen Signalen Signale um zweite Frequenzen herum erfasst,
sodass man von jedem der parallelen Signalverarbeitungskanäle ein erfasstes Signal erhält, und
eine Bewertungsschaltung (27, 31), deren Eingänge mit den Ausgängen der beiden parallelen Signalverarbeitungskanäle derart verbunden sind, dass sie die erfassten Signale empfangen, wobei die Bewertungsschaltung derart ausgelegt ist, dass sie aus den empfangenen Signalen ein Ausgangssignal erzeugt, das ein Maß für das Ausmaß ist, in dem die erfassten Signale miteinander übereinstimmen,

**dadurch gekennzeichnet, dass** die ersten Frequenzen nur Frequenzen um geradzahlige Vielfache der Modulationsfrequenz ($f_m$) herum umfassen und die zweiten Frequenzen nur Signale mit Frequenzen um ungeradzahlige Vielfache der Modulationsfrequenz herum umfassen, sodass der eine von den ersten und zweiten parallelen Signalverarbeitungskanälen derart ausgelegt ist, dass er nur Signale mit Frequenzen um geradzahlige Vielfache der Modulationsfrequenz herum erfasst, und der andere von den ersten und zweiten parallelen Signalverarbeitungskanälen derart ausgelegt ist, dass er nur Signale mit Frequenzen um ungeradzahlige Vielfache der Modulationsfrequenz herum erfasst.

**2.** Vorrichtung nach Anspruch 1, **dadurch gekennzeichnet, dass** die ersten Frequenzen und/oder die zweiten Frequenzen derart ausgelegt sind, dass sie nur ein erstes Vielfaches der Modulationsfrequenz ($f_m$), darin enthalten das Vielfache 0 für die ersten Frequenzen, und ein zweites Vielfaches der Modulationsfrequenz umfassen, wobei die Ordnungszahlen der Vielfachen eine Differenz gleich 2 aufweisen.

**3.** Vorrichtung nach einem der Ansprüche 1 bis 2, **gekennzeichnet durch** einen Produktmodulator (35), der in Reihe nach dem Mischer (9) des Empfangsabschnittes (11) eingebaut ist, um Signale von dem Mischer zu empfangen, wobei die beiden parallelen Verarbeitungskanäle (a, b) die Signale von dem Mischer empfangen, nachdem diese den Produktmodulator passiert haben.

**4.** Vorrichtung nach Anspruch 3, **gekennzeichnet durch** eine Bezugssignalleitung, die den Sendeabschnitt (4) und den Produktmodulator (35) direkt verbindet.

**5.** Vorrichtung nach Anspruch 4, **gekennzeichnet durch** Mittel (3) in dem Sendeabschnitt (4) zum über die Bezugssignalleitung erfolgenden Bereitstellen eines eine gewichtete Summe von Sinussignalen umfassenden Bezugssignals ($v_{ref,p}$) für den Produktmodulator (35).

**6.** Vorrichtung nach Anspruch 5, **dadurch gekennzeichnet, dass** die Mittel (3) derart ausgelegt sind, dass sie Bezugssignale mit Frequenzen bereitstellen, die Vielfache der Modulationsfrequenz ($f_m$) sind.

**7.** Vorrichtung nach einem der Ansprüche 4 bis 6, **dadurch gekennzeichnet, dass** jeder der parallelen Signalverarbeitungskanäle (a, b) derart ausgelegt ist, dass er in den von dem Produktmodulator (35) empfangenen Signalen Signale mit nur einer einzigen Frequenz erfasst.

**8.** Vorrichtung nach einem der Ansprüche 1 bis 7, **dadurch gekennzeichnet, dass** jeder der parallelen Signalverarbeitungskanäle (a, b) einen Kohärenzdetektor (19a, 19b) umfasst.

**9.** Vorrichtung nach Anspruch 8, **dadurch gekennzeichnet, dass** die Kohärenzdetektoren (19a, 19b) derart ausgelegt sind, dass sie Bezugssignale ($v_{ref,a}$, $v_{ref,b}$) verwenden, die von dem Sendeabschnitt (4) stammen und direkt von diesem übertragen werden.

**10.** Vorrichtung nach Anspruch 9, **dadurch gekennzeichnet, dass** der Sendeabschnitt (4) Mittel (3) zum Bereitstellen von eine gewichtete Summe verschiedener Sinussignale umfassenden Bezugssignalen umfasst.

**11.** Vorrichtung nach Anspruch 10, **dadurch gekennzeichnet, dass** die Mittel (3) derart ausgelegt sind, dass sie Bezugssignale mit Frequenzen bereitstellen, die Vielfache der Modulationsfrequenz ($f_m$) sind.

**12.** Vorrichtung nach einem der Ansprüche 1 bis 11, **dadurch gekennzeichnet, dass** der Sendeabschnitt (4) Mittel (3, 37) zum Erzeugen eines Modulationssignals umfasst, dessen Modulationsfrequenz ($f_m$) und/oder Phase mit der Zeit variieren/variiert.

**13.** Vorrichtung nach Anspruch 12, **dadurch gekennzeichnet, dass** die Mittel (3, 37) zum Erzeugen eines Modulationssignals einen Rauschgenerator (39) umfassen.

**14.** Vorrichtung nach einem der Ansprüche 1 bis 13, **dadurch gekennzeichnet, dass** die Bewertungsschaltung eine Summiervorrichtung (27) umfasst, deren Eingänge mit den Ausgängen der parallelen Signalverarbeitungskanäle (a, b) verbunden sind und die derart ausgelegt ist, dass sie ein Ausgangssignal erzeugt, das eine Linearkombination der erfassten Signale ist.

**15.** Vorrichtung nach einem der Ansprüche 1 bis 14, **dadurch gekennzeichnet, dass** der Sender (1) einen Oszillator (2) umfasst, der von einem Funktionsgenerator (3) gesteuert wird, der derart ausgelegt ist, dass er ein Modulationssignal mit einer Dreiecksform oder einer Sägezahnform derart bereitstellt, dass beim Bereitstellen des frequenzmodulierten Sendersignals ($v_s$) dieses dreiecks- oder sägezahnmoduliert ist.

**16.** Verfahren zum Bestimmen von Entfernungen durch Aussenden elektromagnetischer Wellen mit einer Trägerfrequenz ($f_0$), wobei das Verfahren die nachfolgenden Schritte umfasst:

Erzeugen eines Modulationssignals mit einer Modulationsfrequenz ($f_m$),
Modulieren der Frequenz eines die Trägerfrequenz aufweisenden Signals mit dem Modulationssignal, um ein frequenzmoduliertes Signal ($v_s$) zu erzeugen,
Aussenden des frequenzmodulierten Signals als elektromagnetische Wellen,
Empfangen eines Echosignals der elektromagnetischen Wellen, um ein empfangenes Signal ($v_r$) zu empfangen,
Mischen (9) eines Verlustsignals des frequenzmodulierten Signals mit dem empfangenen Signal, um ein gemischtes Signal zu erzeugen,
in dem gemischten Signal erfolgendes Erfassen (a, b) erster Signale mit Frequenzen um erste Frequenzen herum und zweiter Signale mit Frequenzen um zweite Frequenzen herum, um erfasste Signale zu erzeugen, und
Erzeugen (27, 30) eines Bewertungssignals aus den erfassten Signalen,

**dadurch gekennzeichnet, dass** beim Erfassen der ersten und zweiten Signale in dem gemischten Signal die ersten Frequenzen derart genommen werden, dass sie nur Signale mit Frequenzen um geradzahlige Vielfache der Modulationsfrequenz ($f_m$) herum umfassen, und die zweiten Frequenzen derart genommen werden, dass sie nur Signale mit Frequenzen um ungeradzahlige Vielfache der Modulationsfrequenz herum umfassen.

**17.** Verfahren nach Anspruch 16, **dadurch gekennzeichnet, dass** beim Erfassen der ersten und zweiten Signale in dem gemischten Signal die ersten Frequenzen oder die zweiten Frequenzen derart genommen werden, dass sie nur ein erstes Vielfaches der Modulationsfrequenz ($f_m$), darin enthalten das Vielfache 0 für die ersten Frequenzen, und ein zweites Vielfaches der Modulationsfrequenz umfassen, wobei die Ordnungszahlen der Vielfachen eine Differenz gleich der Zahl 2 aufweisen.

**18.** Verfahren nach einem der Ansprüche 16 bis 17, **gekennzeichnet durch** die nachfolgenden zusätzlichen Schritte:

Erzeugen (3) eines Bezugssignals ($v_{ref,p}$), und
Produktmodulieren (35) des gemischten Signals mit dem Bezugssignal bei oder vor dem Erfassen (a, b) der ersten und zweiten Signale.

**19.** Verfahren nach Anspruch 18, **dadurch gekennzeichnet, dass** bei dem Schritt des Erzeugens (3) des Modulationssignals auch das Bezugssignal ($v_{ref,p}$) erzeugt wird.

**20.** Verfahren nach einem der Ansprüche 18 bis 19, **dadurch gekennzeichnet, dass** bei dem Schritt des Erzeugens (3) des Bezugssignals ($v_{ref,p}$) das Bezugssignal derart erzeugt wird, das es eine gewichtete Summe periodischer Signale umfasst.

**21.** Verfahren nach einem der Ansprüche 18 bis 20, **dadurch gekennzeichnet, dass** bei dem Schritt des Erzeugens (3) des Bezugssignals ($v_{ref,p}$) die periodischen Signale derart ausgewählt werden, dass sie Frequenzen aufweisen, die Vielfache der Modulationsfrequenz ($f_m$) sind.

**22.** Verfahren nach einem der Ansprüche 18 bis 21, **dadurch gekennzeichnet, dass** bei dem Schritt des Erfassens (a, b) der ersten Signale und der zweiten Signale die ersten Signale und/oder die zweiten Signale dadurch erfasst werden, dass nur eine einzelne Frequenz in dem Signal, das produktmoduliert (35) worden ist, erfasst wird.

**23.** Verfahren nach einem der Ansprüche 16 bis 22, **dadurch gekennzeichnet, dass** bei dem Schritt des Erfassens (a, b) der ersten Signale und der zweiten Signale die ersten Signale und/oder die zweiten Signale durch Kohärenzerfassung (19a, 19b) erfasst werden.

**24.** Verfahren nach Anspruch 23, **dadurch gekennzeichnet, dass** bei der Kohärenzerfassung (19a, 19b) Bezugssignale ($v_{ref,a}$, $v_{ref,b}$) verwendet werden, die bei dem Schritt des Erzeugens (3) des Modulationssignals erzeugt werden.

**25.** Verfahren nach einem der Ansprüche 23 bis 24, **dadurch gekennzeichnet, dass** bei dem Schritt des Erzeugens (3) der Bezugssignale die Bezugssignale derart erzeugt werden, dass sie eine gewichtete Summe verschiedener Sinussignale umfassen.

**26.** Verfahren nach Anspruch 25, **dadurch gekennzeichnet, dass** bei dem Schritt des Erzeugens (3) der Bezugssignale die Bezugssignale derart erzeugt werden, dass sie Frequenzen aufweisen, die Vielfache der Modulationsfrequenz ($f_m$) sind.

**27.** Verfahren nach einem der Ansprüche 25 bis 26, **dadurch gekennzeichnet, dass** bei dem Schritt des Erzeugens (3, 37) eines Modulationssignals die Modulationsfrequenz ($f_m$) derart erzeugt wird, dass sie mit der Zeit variiert.

**28.** Verfahren nach Anspruch 27, **dadurch gekennzeichnet, dass** bei dem Schritt des Erzeugens (3, 37) eines Modulationssignals die Modulationsfrequenz dadurch erzeugt wird, dass ein Rauschsignal (39) in ein Signal mit einer geeigneten Frequenz und einem geeigneten Leistungsspektrum umgewandelt (41, 43) wird.

**29.** Verfahren nach einem der Ansprüche 16 bis 28, **dadurch gekennzeichnet, dass** bei dem Schritt des Erzeugens eines Bewertungssignals eine Linearkombination der beiden erfassten Signale erzeugt (27) wird.

**30.** Verfahren nach Anspruch 29 **dadurch gekennzeichnet, dass** die Linearkombination eine gewichtete Differenz ist.

**31.** Verfahren nach einem der Ansprüche 16 bis 30, **dadurch gekennzeichnet, dass** bei dem Schritt des Erzeugens (3) eines Modulationssignals das Modulationssignal derart erzeugt wird, das es eine Dreiecksform oder eine Sägezahnform aufweist.


**Revendications**

**1.** Dispositif pour déterminer les distances au moyen d'ondes électromagnétiques, le dispositif comprenant :

- une partie d'émission (4) possédant un émetteur (1) agencé pour fournir un signal d'émission ($V_s$), dont la

fréquence est modulée par un signal de modulation possédant une fréquence de modulation ($f_m$),
- une partie de réception (11) comprenant un mélangeur (9) pour mélanger une partie du signal d'émission transféré directement depuis la partie d'émission vers la partie de réception avec un signal d'écho ($V_t$) reçu depuis une surface réfléchissante (6),
- deux canaux de traitement du signal parallèles (a, b) connectés au mélangeur pour recevoir des signaux depuis le mélangeur,

-- un premier des deux canaux de traitement du signal parallèles étant agencé pour détecter, dans les signaux reçus depuis le mélangeur, des signaux autour des premières fréquences, et
-- un second des deux canaux de traitement du signal parallèles agencé pour détecter, dans les signaux reçus depuis le mélangeur, des signaux autour des secondes fréquences,

de façon à ce que depuis chacun des canaux de traitement du signal parallèles un signal détecté soit obtenu, et
- un circuit d'évaluation (27, 31), dont les entrées sont connectées aux sorties des deux canaux de traitement du signal parallèles afin de recevoir les signaux détectés, le circuit d'évaluation étant agencé pour générer à partir des signaux reçus un signal de sortie, qui est une mesure de l'étendue par laquelle les signaux détectés s'accordent,

**caractérisé en ce que** les premières fréquences comprennent seulement des fréquences autour de multiples pairs de la fréquence de modulation ($f_m$) et les secondes fréquences comprennent seulement des signaux possédant des fréquences autour de multiples impairs de la fréquence de modulation, de sorte que l'un des premier et second canaux de traitement du signal parallèles est agencé pour détecter seulement les signaux possédant des fréquences autour des multiples pairs de la fréquence de modulation et que l'autre des premier et second canaux de traitement du signal parallèles est agencé pour détecter seulement les signaux possédant des fréquences autour des multiples impairs de la fréquence de modulation.

2.  Dispositif selon la revendication 1, **caractérisé en ce que** les premières fréquences et/ou les secondes fréquences sont agencées pour comprendre seulement un premier multiple de la fréquence de modulation ($f_m$), dont le multiple 0 pour les premières fréquences, et un second multiple de la fréquence de modulation, où les nombres d'ordre des multiples possèdent une différence égale à 2.

3.  Dispositif selon l'une quelconque des revendications 1 à 2, **caractérisé par** un modulateur de produit (35) connecté en série après le mélangeur (9) de la partie de réception (11) pour recevoir des signaux depuis le mélangeur, les deux canaux de traitement du signal parallèles (a, b) recevant les signaux depuis le mélangeur après être passés par le modulateur de produit.

4.  Dispositif selon la revendication 3, **caractérisé par** une ligne de signal de référence connectant directement la partie d'émission (4) et le modulateur de produit (35).

5.  Dispositif selon la revendication 4, **caractérisé en ce que** le moyen (3) dans la partie d'émission (4) pour délivrer via la ligne de signal de référence un signal de référence ($V_{ref.p}$) comprend une somme pondérée des signaux sinusoïdaux vers le modulateur de produit (35).

6.  Dispositif selon la revendication 5, **caractérisé en ce que** le moyen (3) est agencé pour délivrer des signaux de référence possédant des fréquences qui sont des multiples de la fréquence de modulation ($f_m$).

7.  Dispositif selon l'une quelconque des revendications 4 à 6, **caractérisé en ce que** chacun des canaux de traitement du signal parallèles (a, b) est agencé pour détecter, dans les signaux reçus depuis le modulateur de produit (35), des signaux possédant uniquement une seule fréquence.

8.  Dispositif selon l'une quelconque des revendications 1 à 7, **caractérisé en ce que** chacun des canaux de traitement du signal parallèles (a, b) comprend un détecteur cohérent (19, 19b).

9.  Dispositif selon la revendication 8, **caractérisé en ce que** les détecteurs cohérents (19a, 19b) sont agencés pour utiliser des signaux de référence ($V_{ref.a}$, $V_{ref.b}$) issus de et transférés directement depuis la partie d'émission (4).

10. Dispositif selon la revendication 9, **caractérisé en ce que** la partie d'émission (4) comprend un moyen (3) pour délivrer des signaux de référence comprenant une somme pondérée de différents signaux sinusoïdaux.

**11.** Dispositif selon la revendication 10, **caractérisé en ce que** le moyen (3) est agencé pour délivrer des signaux de référence qui ont des fréquences qui sont des multiples de la fréquence de modulation ($f_m$).

**12.** Dispositif selon l'une quelconque des revendications 1 à 11, **caractérisé en ce que** la partie d'émission (4) comprend un moyen (3, 37) pour produire un signal de modulation, dont la fréquence de modulation ($f_m$) et/ou dont la phase varie dans le temps.

**13.** Dispositif selon la revendication 12, **caractérisé en ce que** le moyen (3, 37) pour produire un signal de modulation comprend un générateur de bruit (39).

**14.** Dispositif selon l'une quelconque des revendications 1 à 13, **caractérisé en ce que** le circuit d'évaluation comprend un dispositif de sommation (27), dont les entrées sont connectées aux sorties des canaux de traitement du signal parallèles (a, b) et qui est agencé pour générer un signal de sortie, qui est une combinaison linéaire des signaux détectés.

**15.** Dispositif selon l'une quelconque des revendications 1 à 14, **caractérisé en ce que** l'émetteur (1) comprend un oscillateur (2) commandé par un générateur de fonctions (3), qui est agencé pour délivrer un signal de modulation possédant une forme triangulaire ou une forme en dent de scie, de façon à délivrer le signal d'émission modulé en fréquence ($v_s$) qui est modulé de manière triangulaire ou en dent de scie.

**16.** Méthode pour déterminer les distances en délivrant des ondes électromagnétiques possédant une fréquence porteuse ($f_0$), la méthode comprenant les étapes consistant à :

- produire un signal de modulation possédant une fréquence de modulation ($f_m$),
- moduler la fréquence d'un signal possédant la fréquence porteuse avec le signal de modulation pour produire un signal modulé en fréquence ($v_s$),
- délivrer le signal modulé en fréquence en tant qu'ondes électromagnétiques,
- recevoir un signal d'écho des ondes électromagnétiques pour produire un signal reçu ($v_t$),
- mélanger (9) un signal de fuite du signal modulé en fréquence avec le signal reçu pour produire un signal mélangé,
- détecter (a, b) dans le signal mélangé des premiers signaux possédant des fréquences autour des premières fréquences et des seconds signaux possédant des fréquences autour des secondes fréquences pour produire des signaux détectés, et
- générer (27, 30) un signal d'évaluation à partir des signaux détectés,

**caractérisée en ce que** dans la détection des premier et second signaux dans le signal mélangé, les premières fréquences sont prises pour comprendre uniquement des signaux possédant des fréquences autour de multiples pairs de la fréquence de modulation ($f_m$) et les secondes fréquences sont prises pour comprendre seulement des signaux possédant des fréquences autour de multiples impairs de la fréquence de modulation.

**17.** Méthode selon la revendication 16, **caractérisée en ce que** lors de la détection des premier et second signaux dans le signal mélangé, les premières fréquences ou les secondes fréquences sont prises pour comprendre seulement un premier multiple de la fréquence de modulation ($f_m$), dont le multiple 0 pour la première fréquence, et un second multiple de la fréquence de modulation, où les nombres d'ordre des multiples possèdent une différence égale au nombre 2.

**18.** Méthode selon l'une quelconque des revendications 16 et 17, **caractérisée par** les étapes supplémentaires consistant à :

- produire (3) un signal de référence ($v_{ref.p}$), et
- effectuer une modulation de produit (35) pour le signal mélangé avec le signal de référence avant ou après la détection (a, b) des premier et second signaux.

**19.** Méthode selon la revendication 18, **caractérisée en ce que** dans l'étape de production (3) du signal de modulation, le signal de référence ($v_{ref.p}$) est également produit.

**20.** Méthode selon l'une quelconque des revendications 18 à 19, **caractérisée en ce que** dans l'étape de production (3) du signal de référence ($v_{ref,p}$), le signal de référence est produit pour comprendre une somme pondérée des signaux périodiques.

21. Méthode selon l'une quelconque des revendications 18 à 20, **caractérisée en ce que** dans l'étape de production (3) du signal de référence ($v_{ref.p}$), les signaux périodiques sont sélectionnés pour avoir des fréquences qui sont des multiples de la fréquence de modulation ($f_m$).

22. Méthode selon l'une quelconque des revendications 18 à 21, **caractérisée en ce que** dans l'étape de détection (a, b) des premiers signaux et des seconds signaux, les premiers signaux et/ou les seconds signaux sont détectés en détectant seulement une seule fréquence dans le signal ayant été soumis à une modulation de produit (35).

23. Méthode selon l'une quelconque des revendications 16 à 22, **caractérisée en ce que** dans l'étape de détection (a, b) des premiers signaux et des seconds signaux, les premiers signaux et/ou les seconds signaux sont détectés par une détection cohérente (19a, 19b).

24. Méthode selon la revendication 23, **caractérisée en ce que** dans la détection cohérente (19a, 19b), les signaux de référence ($V_{ref.a}$, $V_{ref.b}$) sont utilisés, produits lors de l'étape de production (3) du signal de modulation.

25. Méthode selon l'une quelconque des revendications 23 à 24, **caractérisée en ce que** dans l'étape de production (3) des signaux de référence, les signaux de référence sont produits pour comprendre une somme pondérée des différents signaux sinusoïdaux.

26. Méthode selon la revendication 25, **caractérisée en ce que** dans l'étape de production (3) des signaux de références, les signaux de référence sont produits pour avoir des fréquences qui sont des multiples de la fréquence de modulation ($f_m$).

27. Méthode selon l'une quelconque des revendications 25 à 26, **caractérisée en ce que** dans l'étape de production (3, 37) d'un signal de modulation, la fréquence de modulation ($f_m$) est produite pour être variée dans le temps.

28. Méthode selon la revendication 27, **caractérisée en ce que** dans l'étape de production (3, 37) d'un signal de modulation, la fréquence de modulation est générée en convertissant (41, 43) un signal de bruit (39) en un signal possédant une fréquence appropriée et un spectre de puissance.

29. Méthode selon l'une quelconque des revendications 16 à 28, **caractérisée en ce que** dans l'étape de génération d'un signal d'évaluation, une combinaison linéaire des deux signaux détectés est générée (27).

30. Méthode selon la revendication 29, **caractérisée en ce que** la combinaison linéaire est une différence pondérée.

31. Méthode selon l'une quelconque des revendications 16 à 30, **caractérisée en ce que** dans l'étape de production (3) d'un signal de modulation, le signal de modulation est produit pour avoir une forme triangulaire ou une forme en dent de scie.

Fig. 1

EP 0 965 053 B1

# Fig. 2

EP 0 965 053 B1

Fig. 3a

## Fig. 3b

## Fig. 3c

Difference signal  $D = |J_0(X)| - 1.5|J_2(X)|$

Fig. 4a

# Fig. 4b

Difference signal $D = |A_0(X)| - 1.5|A_2(X)|$ ## Fig. 4c

Product modulation by $\sin(\omega_m t)$     Fig. 5a

$C_1 = J_0 + J_2$

$C_3 = J_1 + J_3$

Fig. 5b

Difference signal  D = |C₁(X)| - 1.5|C₃(X)|  Fig. 5c

Product modulation by $\cos(\omega_m t)$

# Fig. 6a

$V_1 = A_0 + A_2$
$V_3 = A_1 + A_3$

## Fig. 6b

Difference signal $D = |B_1(X)| - 1.5|B_3(X)|$ ## Fig. 6c

Fig. 7a

Fig. 7b

## Fig. 8a

## Fig. 8b